# EUROPEAN PATENT APPLICATION

(11) **EP 4 538 989 A1**
(43) Date of publication of application: **16.04.2025**
(21) Application number: 23202502.3
(22) Date of filing: 09.10.2023
(51) Int. Cl.: G06V 10/764, G06V 20/52, G06V 10/80, G06V 30/19

(54) **DETERMINING OBJECT IDENTIFIERS**

(71) Applicant: Helsing GmbH, 81671 Munich (DE)
(72) Inventor: WANKA, Jean-Marc, 81671 Munich (DE); KRAJEWSKI, Robert, 81671 Munich (DE); SEN, Umur, 81671 Munich (DE)
(74) Representative: Rummler, Felix

(57) **Abstract**

According to an embodiment of the present disclosure, there is provided a computer-implemented method of determining an object identifier, the method comprising: detecting an object; obtaining one or more sensor signals, wherein the sensor signals represent data including at least: positional information related to the object, and contextual information relating to the object; and providing the data to a machine learning module to determine an identifier, in particular a unique identifier or fingerprint associated with the object based on the data.

## Description

### Field

The present disclosure generally relates to determining object identifiers. In particular, the present disclosure relates to methods and systems for determining object identifiers that enable detecting, re-identifying and tracking objects.

### Background

Detection and tracking of objects are used in driver assistance systems and military applications, among others. For example, in a vehicle with a driver assistance system, objects in the surrounding of the vehicle are identified and tracked, and the vehicle may be controlled using the objects as references or to avoid collisions. In military applications, the detection, identification and tracking of objects is performed when identifying targets, for example. The detection, identification and tracking of objects can be performed using mobile sensors, e.g., drones, and/or sensors on the ground. In some scenarios, objects are trackable by a plurality of sensors. An object may enter and exit the field of view of sensors while the object or the sensors are moving. Specifically, the object may be tracked by a first sensor and then a second sensor. In such case, the object must be re-identified so that the second sensor knows that it is tracking the same object previously tracked by the first sensor.

Re-identifying objects between multiple sensors requires the generation of information that describes the object in such a way that it can be clearly (re-)identified. Conventional re-identification approaches in military applications rely on a detection of the position of an object and a manual selection of the object by an operator. When several sensors observe an object at the same or similar positions, the operator confirms that the observed object is the same in each sensor. This approach is slow and potentially unreliable compared to an automated system because it requires human interaction.

The present invention aims to provide an improved method for object re-identification.

### Summary of the Invention

The present invention is defined in the independent claims. The dependent claims recite selected optional features.

In the following, each of the described methods, apparatuses, examples, and aspects, which do not fully correspond to the invention as defined in the claims is thus not according to the invention and is, as well as the whole following description, present for illustration purposes only or to highlight specific aspects or features of the claims.

According to a first aspect of the present disclosure, there is provided a computer-implemented method of determining an object identifier, the method comprising: detecting an object; obtaining one or more sensor signals, wherein the sensor signals represent data including at least: positional information related to the object, and contextual information relating to the object; and providing the data to a machine learning module to determine an identifier, in particular a unique identifier or fingerprint associated with the object based on the data.

The method enables generating an identifier that is based on at least two different types or categories of information, namely positional and contextual information. Each of these types of information on its own may be sufficient to identify an object. In combination, this information may be used to uniquely identify and re-identify objects, thereby improving the accuracy of object identification, tracking and handover between sensors. The present method also improves the reliability of object (re-) identification in crowded areas where numerous objects are present. Further, using at least two types of information for object identification enables compensating for temporary losses of sensorial information, e.g., in case of object occlusion.

In an embodiment, the contextual information includes temporal information relating to the object. The temporal information may be a duration in which the object is detected. This may also be referred to as the "life cycle" of a detected object. For example, if an object is detected for a too short period of time, such object can be eliminated from further consideration, thereby eliminating false positive detections. This can be done by setting an appropriate life-cycle threshold.

In another embodiment, the temporal information can define a timestamp, i.e., the time at which the detection took place. The temporal information can also indicate a number of detections over a given tracking period.

In another embodiment, the contextual information defines one of a plurality of object classes for the object. An object class may be associated with various properties or parameters of an object. For example, there may be object classes for different types of objects such as vehicles, stationary objects (buildings), humans, different types of vehicles (passenger cars, trucks, tanks, boats, ships, etc.), etc. Such object classes may be defined based on physical attributes of the objects, for example size, colour, speed, location etc.

In an embodiment, the data includes information on one more visual features of the object. The visual features may include a colour, shape, edges and/or texture of the object. Using visual features in combination with contextual information improves the robustness and accuracy of object identification. For example, one and the same object may be observed from two different angles or even opposing perspectives. In such case, the detected visual features may be different even though they belong to the same object. By using contextual information, e.g., information on other objects in the surrounding, this may be taken into account. This also useful for distinguishing neighbouring objects that may be similar to one another.

Whether or not visual features may be ambiguous can be determined by comparing camera poses. For example, if the pose angle between two cameras differs by more than a predetermined amount, e.g., 40 degrees, corresponding features detected by both cameras can be determined to be unreliable. Such features can be given less weight or discarded, and in such instance other information (positional and/or contextual) may be used or given more weight for object detection.

In an embodiment, the method comprises performing a classification to define said object class using said one or more visual features. For example, a detected object may be assigned to a selected one of a plurality of object classes using image recognition techniques. Such image recognition techniques are as such known and not described further herein.

In an embodiment, the method comprises dynamically selecting, filtering and/or weighting said data based on an estimated quality of said data, and providing the selected, filtered and/or weighted data to the machine learning module. For example, the data may be obtained from different sensors, say a camera and a radar sensor. The quality of the output of these sensors may be estimated based on selected properties of the output signals, e.g., noise.

Alternatively, the quality may be estimated based on the contextual information, e.g., the presence of other (similar) objects in the surrounding. Based on the quality estimate, the output signals may be given different weights in the subsequent processing. If a sensor signal contains a relatively high amount of noise, it may be given less weight or discarded altogether. Similarly, if the contextual information indicates that there are visually similar objects nearby, potentially ambiguous visual features may be discarded.

In an embodiment, the method comprises: determining said object class for the object, an orientation of the object, and/or a pose of the object using a first machine learning model; extracting said one or more visual features using a second machine learning model; determining a position, in particular a geographic position of the object using ground-base, airborne and/or satellite sensors; and determining the fingerprint of the object based on the outputs of the first and second machine learning models and sensors. According to this embodiment, different machine learning models are used for processing contextual information (e.g., object class, orientation and/or pose) and visual features. In particular, the first model is used for the detection and classification of features or labels, while the second model is used to identify the features/labels. The outputs of the machine learning models are combined with the output of positional sensors to determine the fingerprint of the object with high accuracy and reliability.

An exemplary model that can be used for as the first model is a detection and classification model named YOLO. An exemplary model that can be used for as the second model is a metric learning model for visual features named ArcFace. These models are as such known and not described further herein.

In an embodiment, the positional information includes one or more of an absolute position of the object, in particular a geographical position, a relative position, in particular a position relative to a detector that is used for detecting the object and/or for obtaining the plurality of sensor signals, an orientation of the object, and a pose of the object. Using different types of positional information improves the accuracy of object (re-)identification. The different types of positional information may be selected and combined based on criteria such as an estimated quality of the positional information, similar to the estimated quality of the data described above. The estimated quality and consequential selection may take into account contextual information relating to the surrounding of the object.

As already mentioned, in an embodiment, the contextual information includes information relating to a surrounding of the object. This information may relate to the position of the detected object relative to one or more other objects in the surrounding of the object. Alternatively, or in addition, the information may relate to a constellation of other objects or landmarks in the surrounding of the object. The contextual information may be used in a variety of ways, as already set out above. For example, the contextual information may be used to determine the plausibility, "usefulness" or quality of the available sensorial data. This may be used to (de-)select, filter or weight the available information to improve the accuracy of object (re-)identification.

Another example of a constellation is relative position. For example, two ground cameras may observe two nearby visually similar objects (e.g., cars) from opposite directions. In such case, position, class and visual features can be insufficient to identify the objects because they are nearby, belong to the same class and are visually similar, respectively. In such instance, constellation can be used to determine their positional relation in the detection space. For example, the "left" car from a first camera may be determined to be the same as the "right" car in a second camera. Furthermore, such case can be recognised by checking visual and positional similarity. If all similarities between nearby objects are determined to be high, an object identification cannot be made with high confidence.

In an embodiment, the method comprises matching and filtering of features and/or the position of features of the one or more objects in the surrounding of the object between consecutive images of said one or more objects and/or images of said one or more objects recorded by different cameras. This further increases the accuracy of the contextual information relating to objects in the surrounding, which in turn leads to an improved accuracy and reliability of object (re-)identification.

In an embodiment, the method comprises: determining a size of the object, and determining the positional information using a single camera. This enables implementing the method in devices (e.g., drones) that only have a single camera. By determining the size of an object before determining the positional information, implausible results may be excluded.

In an alternative embodiment, the method comprises determining the positional information using a plurality of cameras and performing multi-camera triangulation. In many applications, this approach yields more accurate results.

In an embodiment, the method is performed for a plurality of different objects, wherein the method further comprises: storing an object identifier for each of the objects and/or updating stored object identifiers. This enables generating and maintaining a database or catalogue of detected objects. The objects in the database or catalogue may represent potential targets.

In accordance with another aspect of the present disclosure, there is provided a method of target identification, the method comprising: obtaining an object identifier stored in accordance with the method as described above, wherein the obtained object identifier is associated with a selected target; monitoring an area for objects representing potential targets; tracking one or more selected ones of the potential targets; determining object identifiers for the selected potential targets using the method of any preceding claim; and detecting the selected target by detecting an object identifier for the selected potential targets that matches the obtained object identifier.

Accordingly, the method enables retrieving an object identifier representing a selected target from the database/catalogue and using the retrieved object identifier to (re-)identify and engage the target.

Alternatively, instead of retrieving an object identifier from the catalogue or database, it is possible for devices (e.g., drones) implementing the above method to directly transfer object identifiers between one another, thereby performing a handover. In particular, a first device (drone) that is tracking a target may transfer the object identifier to a (better positioned) second device (drone) which may then use the object identifier to re-identify and engage the target.

In an embodiment, the target is detected using a different sensor than the sensor used for detecting the object associated with the obtained object identifier. In other words, the initial detection and identification of the object may be performed by a first sensor, and the subsequent re-identification of the object as a target may be performed by a second sensor (e.g., following target handover).

In an embodiment, potential targets are selected based on object classes and/or visual similarity with the selected target. In other words, the object identifier of a selected target may be used to select a subset of stored object identifiers, wherein each of the object identifiers of the subset is associated with a potential target because they belong to the same class and/or are visually similar (i.e., have the same or similar visual features).

Comparing objects (targets) within predetermined classes substantially improves the accuracy. Objects in different classes may have a high similarity and therefore, when compared, may lead to false positive detections. This is because visual re-identification models are often trained based on objects within only a few classes or without class information. For example, a model may be trained on drones and vehicles, which may then present high scores and a false positive detection when comparing a drone to a bird. Therefore, taking into account sufficient class information when training the model and filtering by class when using the model eliminates incorrect high scores.

According to another aspect of the present disclosure, there is provided a system comprising one or more processors and one or more storage devices, wherein the system is configured to perform the computer-implemented method as described above.

According to another aspect of the present disclosure, there is provided a computer program product for loading into a memory of a computer, comprising instructions, that, when executed by a processor of the computer, cause the computer to execute the computer-implemented method as described above.

### Brief description of the drawings

The features, objects, and advantages of the present disclosure will become more apparent from the detailed description set forth below when taken in conjunction with the drawings in which:
Figure 1 illustrates a block diagram of a system for determining an object identifier according to an embodiment of the present disclosure;
Figure 2 illustrates a flow chart of a method for determining an object identifier according to an embodiment of the present disclosure; and
Figure 3 illustrates a flow chart of a method for re-identifying an object according to an embodiment of the present disclosure.

### Detailed description of exemplary embodiments

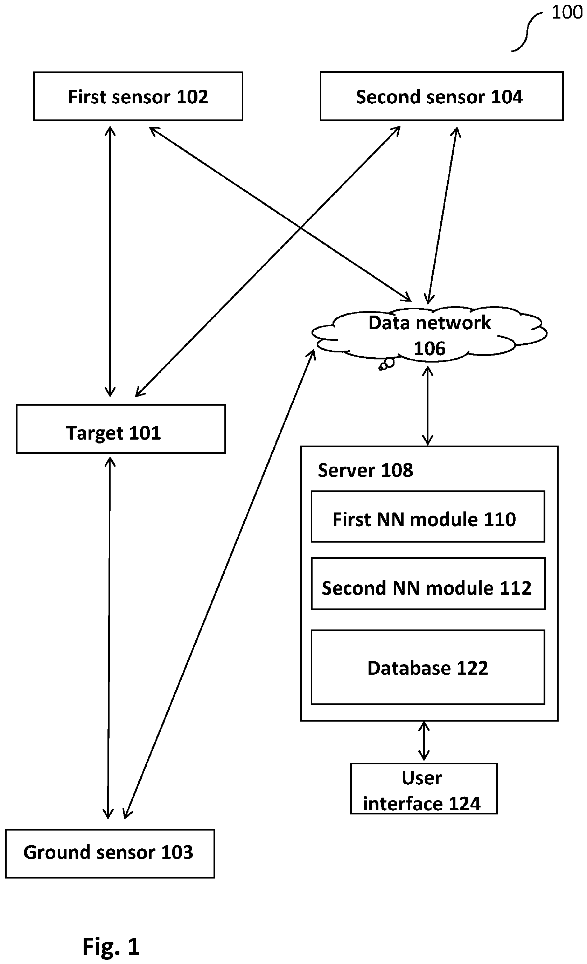

Figure 1 illustrates a block diagram of a system 100 for determining an object identifier in accordance with an exemplary embodiment of the present disclosure. The system 100 is adapted to identify a target 101 and comprises a first sensor 102, a ground sensor 103, and a second sensor 104. The sensors 102, 103 and 104 are in communication with a server 108 via a data network 106. The first sensor 102 and the second sensor 104 may be arranged in first and second drones, respectively. For example, the first and second sensors 102, 104 may each comprise a camera. The ground sensor 103 may comprise a radar device to determine an absolute or relative position of the target 101. Instead of a radar device, EO/IR cameras can be used. For ground cameras, the object position may be estimated based on single- or multi-camera approaches. In a single-camera implementation, the position is estimated by the object size and estimated object class. In a multi-camera approach, triangulation based on position/pose of multiple cameras (drone or ground) can be used.

It is noted that Figure 1 illustrates an exemplary, non-limiting embodiment. There may be different kinds and combinations of sensors. For example, there may be any number of sensors. The sensors may include ground sensors, aerial sensors and other types of sensors and any combination thereof.

The data network 106 may be any suitable data communication network or combination of networks, including hardwire based networks such as cable and telephone networks, and/or wireless based networks such as wireless local- or wide-area networks, satellite, and cellular phone communication networks, etc.

The server 108 may include a plurality of servers located at a central site or across various distributed sites. The server 108 includes first and second machine learning (NN) modules 110 and 112. The first NN module 110 is used for detection and classification. This also enables object tracking and determining object movement (trajectory and pose). The second NN 112 is used for visual feature extraction (visual fingerprinting). For example, for each detection, a 1024-dimensional vector of data type float32 is extracted, and the similarity is checked by cosine similarity. The second NN 112 provides shape, appearance, and other visual characteristics in these vectors. Alternatively, a single NN can be used.

The server 108 also comprises a memory which includes a database 122. The memory may be a random access memory (RAM), a hard disk drive, a removable storage drive, flash memory, and/or any similar non-volatile storage media. The database 122 is provided to store a catalogue of object identifiers representing potential or actual targets.

Alternatively, the first and second NN modules 110 and 112 may be co-located with the first sensor 102 and/or the second sensor 104. For example, the first NN module 112 and the second NN module 114 may be included in a computing system on a drone or other vehicle also carrying the first sensor 102 and the second sensor 104. This has the advantage of not having to transfer images to the server 108. Also, it is possible to extract feature vectors at the sensor computers and transfer low dimensional, lighter vectors to the server 108. The same visual model is used on all sensor computers.

A user interface 124 is provided to enable interaction of a user with the server 108. For example, the user interface 124 may be used to select a target from the database 122 and to generate a command for the first and/or second sensors 102, 104 to identify and engage the selected target. In addition, the user interface 124 may be configurable to output data determined by the first and second NN modules 112 and 114. The user interface 124 may be further configurable to enable other user input, e.g., for interfering with the object detection, identification and/or classification, for selecting sensor data, for selectively disengaging the sensor(s) from an object, for selectively deactivating the sensor(s), or the like.

According to an embodiment, the ground sensor 103 is configured to output a sensor signal indicative of a position of the target 101. The position may be an absolute (geographic) position, or a relative position, e.g., a position relative to the ground sensor 103. The sensor signal is transmitted to the server 108 via the data network 106.

In addition, first sensor data is captured by the first sensor 102. The first sensor data may include any one or more of electro-optical, infrared, radar, synthetic aperture radar, LIDAR, acoustic, seismic, and signal-intelligence data, or the like. The first sensor 102 may be installed on vehicles (manned/unmanned), drones, airplanes, vessels, satellites, or the like. The first sensor data is transmitted from the first sensor 102 over the data network 106.

The first sensor data is indicative of one or more objects, such as military objects. The first sensor data is processed by the first NN module 110 to detect, classify and estimate the pose of an object within the captured image or video data. Static and/or dynamic objects may be captured at one or more moments in time. The objects may be identified based on characteristics such as their shape, motion and/or appearance.

In particular, the first sensor data is processed by the first NN module 110 to determine contextual information relating to the target 101. The contextual information may indicate an object class. In particular, the object may be classified based on its visual and/or associated technical or physical characteristics. Classes may comprise characteristics for a plurality of objects. For example, an object may be classified as a "vehicle" due to features such as its rectangular shape when viewed from above and its movement, as represented by the first sensor data. The classes may be organized in a hierarchical system. For example, a class "vehicle" may be subdivided into classes "motorcycle", "passenger car", "truck", etc. The class "passenger car" may be subdivided into classes for specific car models.

In addition, or alternatively, the contextual information may include temporal information, e.g., a duration for which an object is detected. Other types of contextual information are envisaged, as described herein.

The server 108 is configured to process the positional information provided by the ground sensor 103 and single or multi-camera position estimates based on the position and pose of sensors 102, 104 and the outputs of the first and second NN modules 110, 112 to determine an object identifier or "fingerprint" that uniquely identifies the target 101. As mentioned above, some or all of the processing can also performed locally in any of the sensors 102, 103 and 104. The fingerprint is stored in the database 122.

In the above example, the classification is performed by the first NN module 110, which has been trained accordingly. The first NN module 110 is configured to analyse the first sensor data to detect and classify an object based on its technical visual characteristics which may be represented by visual features. To this end, the first NN module 110 may comprise or implement an image recognition algorithm. The first NN may be trained using a predetermined set of objects with predetermined technical characteristics. The first NN 110 may be continuously trained with the data captured by the first (and/or second) sensor 102 (and/or 104).

Individual objects or a plurality of similar or different objects may be detected, identified and/or classified using the same one or a plurality of first sensor data or datasets. The sensor data may be obtained at the same time from different first sensors 102 and/or consecutively from one or more of the first sensors 102.

Alternatively, or in addition, the assignment of one or more classes to an object may be based on exceeding a threshold value indicative of the similarity of one or more technical, physical, visual or other characteristics of the identified object with respective one or more characteristics of an object stored in a database.

Based on the assigned class, a size parameter of the object, e.g. a minimum and maximum potential size of the object, may be determined. For example, if an object is assigned to the class "vehicle", a range of potential sizes for a vehicle can be retrieved from the database. For example, a typical size range for a vehicle may be determined to be 3-8 m. If an object is assigned to the class "passenger car", a typical size range of 3-5 m may be retrieved. This contextual information can be used to improve the accuracy when determining object identifiers. The object size is mainly used in single-camera localisation, thereby contributing to the identification process. Object class similarity can be represented by a hierarchical class tree that is directly used as a similarity measure. For example, a truck and a car are both vehicles, with high but not 100% similarity.

In another example, the contextual information represents one or more additional location-dependent parameters from which information about the current environment or surrounding of the identified object may be derived. For example, location information may be obtained from sensor data or from external sources such as a control (command) centre. Such location information may be used to narrow down the range of potential objects or classes of objects that may be present in that environment: For example, if the location of the sensor or drone is determined to be above land, a moving vehicle is likely to be a land vehicle, e.g., a passenger car, truck, tank, etc. If, on the other hand, the location of the sensor is determined to be above water, a moving vehicle is likely to be a boat or ship. In another example, if a moving object classified as a vehicle located in an environment on land without streets, the object may be classified as an off-road vehicle such as a tank or a tractor.

The object identifiers stored in the database 122 may be used for handing over the tracking of the target from one sensor to another (new) sensor, e.g., from the first sensor 102 to the second sensor 104. To this end, the object identifier associated with the target 101 is retrieved from the database 122 and provided to the new sensor (e.g., the second sensor 104). The new sensor may then detect an object, determine an object identifier for that object, and identify the object as the target 101 if the determined object identifier corresponds to the retrieved object identifier. The new sensor uses the same method, in particular the same NN models to determine the object identifier as the sensor used for the initial identification.

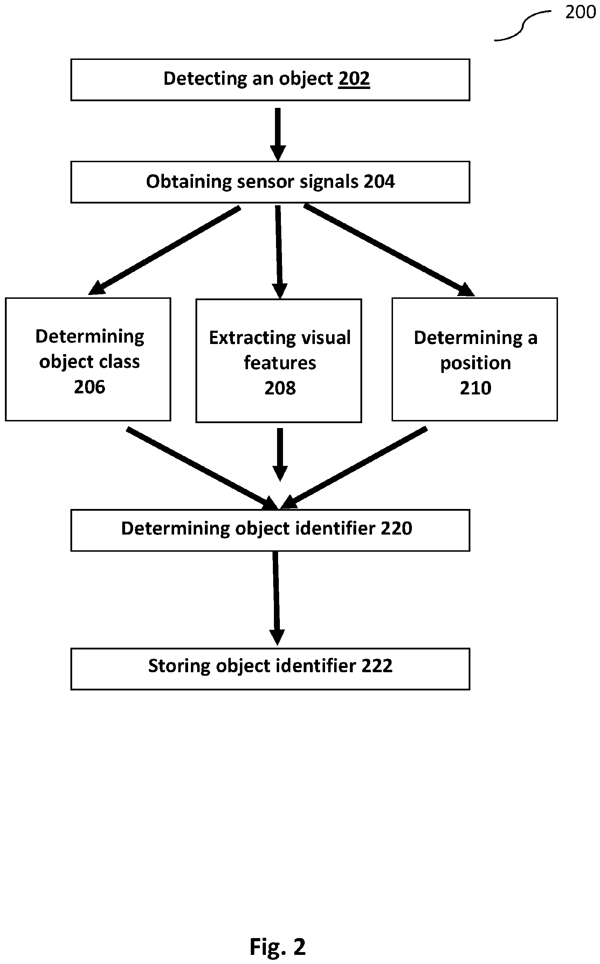

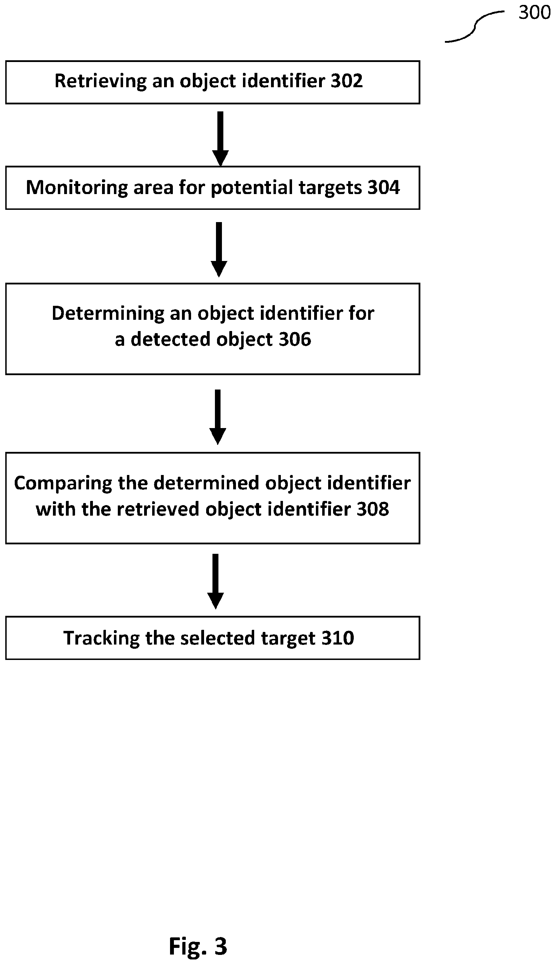

Figure 2 illustrates a flow chart of a method 200 for determining an object identifier according to an embodiment of the present disclosure. The method may be implemented using the system as shown in and described in connection with Figure 1. In step 202, an object is detected. In step 204, the method obtains one or more sensor signals relating to the detected object, such as the sensor signals described in connection with Figure 1. The sensor signals are then used to determine contextual and positional information. In particular, in step 206, the detected object is assigned to a selected one of a plurality of classes. In step 208, visual features of the detected object are extracted. In step 210, positional information is determined, e.g., an absolute or relative position of the detected object. In step 220, the positional, visual and contextual information (at least) is combined and processed to determine an object identifier for the detected object. In step 222, the object identifier is stored in a database, from where it can be retrieved by another sensor for object re-identification, as illustrated in Figure 3 (described below).

Accordingly, the method includes combining different specific information to generate a unique identifier or fingerprint of each detected object. The generation of the fingerprint may be AI-based. A fingerprint thus generated may be stored and used for re-identifying the object in sensor data of the same or other sensors.

The method may be implemented in a surveillance system and applied to any detected object in a monitored area. The fingerprints for the detected objects may be registered in an identity catalogue and used to re-identify the associated objects as targets at a later time and/or by a different sensor.

As described above, the fingerprint generation process can include multiple different components, covering visual aspects, position estimates, surrounding context and temporality. As a result, information-rich fingerprints are generated that uniquely define associated detected objects.

In an embodiment, the components or parameters may include visual aspects, in particular visual features (colour, shape, texture, etc.) that may be extracted for visual similarity estimation. This component yields reliable results when the observer cameras observe the object from similar perspectives. This component may also include object class filtering. To improve the results when comparing visual features between unknown object classes, this component is combined with other components, in particular a classification model, as described above.

In an embodiment, the fingerprint generation uses positional information regarding the detected object. For example, a geo-position of the detected object may be determined using a single camera localisation approach supported by object size estimation based on object class. Alternatively, or in addition, multi-camera triangulation may be employed. Furthermore, pose and orientation of the object may be determined, for example using visual deep learning models. A detection of position similarity may be used to avoid misidentifications due to visual similarity between different objects.

In an embodiment, the fingerprint generation process takes into account context information, e.g., information relating to the environment/surrounding of the detected object. Surrounding "awareness" enables extracting key features shared between different sensors, e.g., cameras and determining a constellation of visible objects. This contextual information can be used to define reference points between different sensors (e.g., cameras) when re-identifying an object, e.g., during handover from one sensor to another. For example, detected key-points may be matched between different cameras. Also, the contextual information can be used to define boundaries of observation in the re-identification/handover of objects. Further, if there are multiple objects in an observed area, the position of the objects in respect to each other, i.e., their constellation, enables selecting a targeted object by position transfer in between cameras.

The above-described components and features contribute to a similarity function to re-identify the correct object. In an embodiment, the components and features may be selected and combined to determine a confidence score for correct re-identification.

Accordingly, a unique a fingerprint is generated for each detected object. The fingerprint may be based on object class, orientation and pose, determined by a first model. Visual features may be extracted by a different model, e.g., a deep learning model. A geo-position may be estimated by a positioning system using ground and/or air sensors. A fingerprint thus obtained is transferred to an identity catalogue where it is registered as a new object identifier or used to update/replace an existing object identifier of a previously detected object. In miliary applications, the identity catalogue can be used to provide a common operational picture (COP) from which targets can be selected.

Figure 3 illustrates a flow chart of a method 300 for re-identifying an object according to an embodiment of the present disclosure. In step 302, a target is selected and a corresponding object identifier is retrieved from the identity catalogue. In step 304, an area in which the selected target is expected is monitored. In step 306, if an object that could correspond to the selected target is detected, an object identifier is determined, using the above-described methods and models. In step 308, the determined object identifier is compared with the retrieved object identifier. In step 310, if the identifiers are identical or sufficiently similar, the selected target is tracked/engaged.

The above-described method can be used for target-handover. For example, a user selects a target in the COP. A corresponding object identifier/fingerprint is retrieved from the database (step 302). An effector, e.g., a drone with a sensor (e.g., sensor 104 in Fig. 1) receives the fingerprint information and positions itself to the target, filters the visible objects (detections) by their classes, selects the object with high visual feature similarity and starts tracking.

The above method enables target handovers between sensors with increased accuracy. Also, it enables re-identification of a target that was observed some time ago. Further, due to the combined sensorial information, it enables object tracking that is robust to object occlusions or other distractions.

## Claims

1. A computer-implemented method of determining an object identifier, the method comprising:
detecting an object;
obtaining one or more sensor signals, wherein the sensor signals represent data including at least:
positional information related to the object, and
contextual information relating to the object; and
providing the data to a machine learning module to determine an identifier, in particular a unique identifier or fingerprint associated with the object based on the data.

2. The method of claim 1, wherein the contextual information includes temporal information relating to the object, in particular a duration in which the object is detected and/or a point in time at which the object is detected, and/or wherein the contextual information defines one of a plurality of object classes for the object.

3. The method of claim 1 or 2 wherein the data includes information on one more visual features of the object, in particular one or more of a colour, shape, edges and texture of the object.

4. The method of claims 2 and 3, comprising performing a classification to define said object class using said one or more visual features.

5. The method of any preceding claim, comprising dynamically selecting, filtering and/or weighting said data based on an estimated quality of said data, and providing the selected, filtered and/or weighted data to the machine learning module.

6. The method of any preceding claim, comprising:
determining said object class for the object, an orientation of the object, and/or a pose of the object using a first machine learning model;
extracting said one or more visual features using a second machine learning model;
determining a position, in particular a geographic position of the object using ground-base, airborne and/or satellite sensors; and
determining the fingerprint of the object based on the outputs of the first and second machine learning models and sensors.

7. The method of any preceding claim, wherein the positional information includes one or more of
an absolute position of the object, in particular a geographical position,
a relative position, in particular a position relative to a detector that is used for detecting the object and/or for obtaining the plurality of sensor signals,
an orientation of the object, and
a pose of the object.

8. The method of any preceding claim, wherein the contextual information includes information relating to a surrounding of the object, in particular information relating to the position of the detected object relative to one or more other objects in the surrounding of the object, and/or the constellation of other objects or landmarks in the surrounding of the object.

9. The method of claim 8, further comprising:
matching and filtering of features and/or the position of features of the one or more objects in the surrounding of the object between consecutive images of said one or more objects and/or images of said one or more objects recorded by different cameras.

10. The method of any preceding claim, further comprising:
determining a size of the object, and determining the positional information using a single camera; or
determining the positional information using a plurality of cameras and performing multi-camera triangulation.

11. The method of any preceding claim, wherein the method is performed for a plurality of different objects, the method further comprising:
storing an object identifier for each of the objects and/or updating stored object identifiers.

12. A method of target identification, the method comprising:
obtaining an object identifier stored in accordance with the method of claim 11, wherein the obtained object identifier is associated with a selected target;
monitoring an area for objects representing potential targets;
tracking one or more selected ones of the potential targets;
determining object identifiers for the selected potential targets using the method of any preceding claim; and
detecting the selected target by detecting an object identifier for the selected potential targets that matches the obtained object identifier.

13. The method of claim 12, wherein the target is detected using a different sensor than the sensor used for detecting the object associated with the obtained object identifier, and/or comprising selecting potential targets based on object classes and/or visual similarity with the selected target.

14. A system comprising one or more processors and one or more storage devices, wherein the system is configured to perform the computer-implemented method of any preceding claim.

15. A computer program product for loading into a memory of a computer, comprising instructions, that, when executed by a processor of the computer, cause the computer to execute the computer-implemented method of any of claims 1-13.

## Amended claims

### Amended claims in accordance with Rule 137(2) EPC.

1. A computer-implemented method (200) of determining an object identifier, the method comprising:
detecting (202) an object;
obtaining (204) one or more sensor signals, wherein the sensor signals represent data including at least:
positional information related to the object, and
contextual information relating to the object; and
providing the data to a machine learning module to determine (220) an identifier, in particular a unique identifier or fingerprint associated with the object based on the data.

2. The method (200) of claim 1, wherein the contextual information includes temporal information relating to the object, in particular a duration in which the object is detected and/or a point in time at which the object is detected, and/or wherein the contextual information defines one of a plurality of object classes for the object.

3. The method (200) of claim 1 or 2 wherein the data includes information on one more visual features of the object, in particular one or more of a colour, shape, edges and texture of the object.

4. The method (200) of claims 2 and 3, comprising performing a classification to define said object class using said one or more visual features.

5. The method (200) of any preceding claim, comprising dynamically selecting, filtering and/or weighting said data based on an estimated quality of said data, and providing the selected, filtered and/or weighted data to the machine learning module.

6. The method (200) of any preceding claim, comprising:
determining (206) said object class for the object, an orientation of the object, and/or a pose of the object using a first machine learning model;
extracting (208) said one or more visual features using a second machine learning model;
determining (210) a position, in particular a geographic position of the object using ground-base, airborne and/or satellite sensors; and
determining the fingerprint of the object based on the outputs of the first and second machine learning models and sensors.

7. The method (200) of any preceding claim, wherein the positional information includes one or more of:
an absolute position of the object, in particular a geographical position,
a relative position, in particular a position relative to a detector that is used for detecting the object and/or for obtaining the plurality of sensor signals,
an orientation of the object, and
a pose of the object.

8. The method (200) of any preceding claim, wherein the contextual information includes information relating to a surrounding of the object, in particular information relating to the position of the detected object relative to one or more other objects in the surrounding of the object, and/or the constellation of other objects or landmarks in the surrounding of the object.

9. The method (200) of claim 8, further comprising:
matching and filtering of features and/or the position of features of the one or more objects in the surrounding of the object between consecutive images of said one or more objects and/or images of said one or more objects recorded by different cameras.

10. The method (200) of any preceding claim, further comprising:
determining a size of the object, and determining the positional information using a single camera; or
determining the positional information using a plurality of cameras and performing multi-camera triangulation.

11. The method (200) of any preceding claim, wherein the method is performed for a plurality of different objects, the method further comprising:
storing (222) an object identifier for each of the objects and/or updating stored object identifiers.

12. A method (300) of target identification, the method comprising:
obtaining (302) an object identifier stored in accordance with the method (200) of claim 11, wherein the obtained object identifier is associated with a selected target;
monitoring (304) an area for objects representing potential targets;
tracking (310) one or more selected ones of the potential targets;
determining object identifiers for the selected potential targets using the method of any preceding claim; and
detecting the selected target by detecting an object identifier for the selected potential targets that matches the obtained object identifier.

13. The method (300) of claim 12, wherein the target is detected using a different sensor than the sensor used for detecting the object associated with the obtained object identifier, and/or comprising selecting potential targets based on object classes and/or visual similarity with the selected target.

14. A system (100) comprising one or more processors and one or more storage devices, wherein the system is configured to perform the computer-implemented method of any preceding claim.

15. A computer program product for loading into a memory of a computer, comprising instructions, that, when executed by a processor of the computer, cause the computer to execute the computer-implemented method of any of claims 1-13.
